# EUROPEAN PATENT APPLICATION

(11) **EP 1 865 011 A1**
(43) Date of publication of application: **12.12.2007**
(21) Application number: 07011138.0
(22) Date of filing: 06.06.2007
(51) Int. Cl.: C08G 59/00

(54) **Low viscosity curable compositions**

(30) Priority: 09.06.2006 US 450486
(71) Applicant: National Starch and Chemical Investment Holding Corporation, New Castle, Delaware 19720 (US)
(72) Inventor: Wheelock, Brian, C., Sundown New Hampshire 03873 (US); Morganelli, Paul, Upton Massachusetts 01568 (US)
(74) Representative: Held, Stephan

(57) **Abstract**

A low viscosity capillary flow underfill composition having improved filler dispersion and cure rate. One embodiment of the composition comprises one or more epoxy resins, such as cycloaliphatic epoxy resins, one or more catalysts, such as super acid catalysts and one or more inert components, which may comprise diluents such as non-electrically conductive fillers. Further embodiments of the invention include compositions further comprising low viscosity non-epoxy reactive diluents, such as vinyl ether, and polyols such as polyester polyols. A further embodiment is a method of assembling an electronic component utilizing the low viscosity underfill composition of the present invention. A still further embodiment is an electronic device or component containing the underfill composition of the present invention.

## Description

### FIELD OF THE INVENTION

The present invention is related to a low viscosity underfill encapsulant and a method for its application to electronic components.

### BACKGROUND OF THE INVENTION

This invention relates to underfill encapsulant compounds prepared from epoxies to protect and reinforce the interconnections between an electronic component and a substrate in a microelectronic device. Microelectronic devices contain multiple types of electrical circuit components, mainly transistors assembled together in integrated circuit (IC) chips, but also resistors, capacitors, and other components. These electronic components are interconnected to form the circuits, and eventually are connected to and supported on a carrier or a substrate, such as a printed wire board. The integrated circuit component may comprise a single bare chip, a single encapsulated chip, or an encapsulated package of multiple chips. The single bare chip can be attached to a lead frame, which in turn is encapsulated and attached to the printed wire board, or It can be directly attached to the printed wire board. These chips are originally formed as a semiconductor wafer containing multiple chips. The semiconductor wafer is diced as desired into individual chips or chip packages.

Whether the component is a bare chip connected to a lead frame, or a package connected to a printed wire board or other substrate, it is typically interconnected to a PWB via numerous solder joints formed during a reflow process. During its normal service life, the electronic assembly is subjected to cycles of widely varying temperature ranges. Due to the differences in the coefficient of thermal expansion for the electronic component, the interconnect material, and the substrate, this thermal cycling can stress the components of the assembly and cause it to fail. Another source of failure that is especially common to handheld electronic devices is the stresses caused by impacts resulting from accidental dropping of the device. To prevent the failure, the gap between the component and the substrate is filled with a polymeric encapsulant, hereinafter called underfill or underfill encapsulant, to reinforce the interconnect material and to absorb some of the stress of the thermal cycling, impact and other mechanical stresses.

Two prominent uses for underfill technology are for reinforcing packages known in the industry as chip scale packages (CSP), in which a chip package is attached to a substrate, and flip-chip packages in which a chip is attached by an array of interconnections to a substrate.

In conventional capillary flow underfill applications, the underfill dispensing and curing takes place after the reflow of the solder interconnect. In this procedure, flux or solder paste is initially applied on the metal pads on the substrate. Next, the chip is placed on the fluxed area of the substrate, on top of the soldering site. The assembly is then heated to allow for reflow of the solder joint. At this point, a measured amount of underfill encapsulant material is dispensed along one or more peripheral sides of the electronic assembly and capillary action within the component-to-substrate gap draws the material inward. After the gap is filled, the underfill encapsulant is subsequently cured to reach its optimized final properties.

The demand for faster flowing, low viscosity board-level underfill compositions that cure at temperatures below about 120 C is increasing for CSP's and ball-grid arrays. Low viscosity applications provide multiple processing advantages, including eliminating the requirement of heating the substrate before application and allowing for the application of the underfill in extremely narrow gaps. The elimination of the heating of the substrate results in increased manufacturing efficiency in the form of improved manufacturing throughput.

Existing low viscosity underfills have several common disadvantages. One of the disadvantages of such underfills is that filler materials contained within the composition frequently separate and settle when exposed to catalysts such as acid catalysts, thus reducing the effectiveness of the composition. Another common disadvantage is that contaminants in a solder interconnect neutralize the catalyst and thus reduce the effectiveness of the composition. Accordingly, it would be advantageous to provide a low viscosity capillary flow underfill composition in which the filler particles remain dispersed throughout the composition and in which curing is enhanced despite the presence of contaminants in the solder flux.

### SUMMARY OF THE INVENTION

The present invention relates to a low viscosity capillary flow underfill composition having improved filler dispersion and cure rate. One embodiment of the composition comprises one or more epoxy resins, such as cycloaliphatic epoxy resins, one or more catalysts, such as super acid catalysts and one or more inert components, which may include diluents such as non-electrically conductive fillers. Further embodiments of the invention include compositions further comprising low viscosity non-epoxy reactive diluents, such as vinyl ether, and polyols such as polyester polyols. A further embodiment of the present invention is a method of assembling an electronic component utilizing the low viscosity underfill composition of the present invention. A still further embodiment of the present invention is an electronic device or component containing the underfill composition of the present invention.

### DETAILED DESCRIPTION OF THE PREFERRED EMBODIMENTS

The present invention relates to low viscosity underfill compositions that may be utilized on various electronic components, including chip scale packages and ball-grid arrays. The composition comprises an epoxy resin which, in one embodiment is a cycloaliphatic epoxy resin, greater than 1 weight percent catalyst and one or more non-electrically conductive filler materials. In further embodiments the composition may include low viscosity non-epoxy reactive diluents, functional flexibilized polymers and other ingredients as desired.

Examples of epoxy resins suitable for use in the present underfill composition include non-glycidyl ether epoxy resins such as cycloaliphatic epoxy resins, monofunctional and multifunctional glycidyl ethers of Bisphenol-A and Bisphenol-F, aliphatic and aromatic epoxies, saturated and unsaturated epoxies, or a combination thereof. Cycloaliphatic epoxy resins are utilized in compositions requiring low viscosity because they have a viscosity that is an order of magnitude lower than the viscosity of bisphenol glycidyl ether epoxies.

Examples of non-glycidyl ether epoxides include epoxidized diolefins, such as 3,4-epoxycyclohexylmethyl, 3,4-epoxycyclohexane carboxylate, which contains two epoxide groups that are part of the ring structures and an ester linkage, and bis (3,4-epoxycyclohexylmethyl adipate). Additional epoxies that may be utilized include vinylcyclohexene dioxide, which contains two epoxide groups and one of which is part of the ring structure, 3,4-epoxy-6-methyl cyclohexyl methyl-3,4-epoxycyclohexane carboxylate and dicyclopentadiene dioxide and mixtures thereof. Examples of commercially available non-glycidyl ether epoxides include ERL-4221 and ERL-4299, both commercially available from Dow Chemical Company. The one or more epoxy resin is typically used in an amount of between 20 weight percent to about 60 weight percent of the composition.

One or more catalysts are included in the composition in an amount effective to provide curing for the composition. In one embodiment the catalyst is a latent cationic catalyst and is a strong acid catalyst of the type commonly referred to as a super acid. Super acid catalysts are materials that are capable of producing very strong acids upon exposure to heat or, in some cases, UV light. The catalyst provides thermal curing of the cycloaliphatic resin at high speeds and low temperatures. Among the latent cationic catalysts are hexafluoroantimonate salts. The latent cationic catalyst may be neutralized in part by contaminants, such as amines and amides, in solder interconnect material. Such contaminants inhibit the curing of the composition. To overcome the contaminants that may be encountered, the catalyst should be utilized in an amount in the range of greater than about 0.9 weight percent of the composition, and preferably in an amount in the range of greater than about 1.4 weight percent of the composition.

An inert component is utilized in the composition. The inert component performs as a diluent which is non-reactive. One embodiment comprises find particle fillers which may not be electrically conductive. Examples of non-conductive fillers are silica, mica, talc, hollow glass beads, zinc oxide, magnesium oxide and mixtures thereof. Such non-conductive fillers are prone to agglomerate and settle when exposed to acid catalysts. In one embodiment the silica is a spherical silica with an average diameter of less than one micron, such as is commercially available as SO-E2 from Adamtechs. To avoid such agglomeration and settling, the average particle sizes of the filler should be less than about three microns and in one embodiment less than one micron. In a further embodiment, the particle size may be in the range of about 0.3 microns to about one micron. In one embodiment of the composition, the filler is spherical fused silica. The one or more non-electrically conductive filler is typically used in an amount of between 5 weight percent to about 60 weight percent of the composition.

Non-epoxy, low viscosity reactive diluents can provide lower viscosity compositions that liberate less heat during the curing step than do all-epoxy compositions. The reactive diluent in one embodiment is a vinyl ether or a cyclic lactone that is reactive with the epoxy resin and also capable of undergoing homopolymerization. Other diluents that may be used in combination with vinyl ethers or lactones include epoxy diluents such as p-tert-butyl-phenyl glycidyl ether, allyl glycidyl ether, glycerol diglycidyl ether, glycidyl ether of alkyl phenol (commercially available from Cardolite diglycidyl Corporation as Cardolite NC513), and butanediodiglycidylether (commercially available as BDGE from Aldrich).

The composition may optionally comprise a polyol component to form a functionalized flexible polymer. The polyol component of the composition may comprise one or more of various polyols. Preferably the polyols to be utilized have hydroxyl functionality of at least two and molecular weights in the range of about 500 to about 50,000 and include polyester polyols, polyether polyols, polyolefin polyols, polycarbonate polyols and mixtures thereof. Additional polyols include polycaprolactone diols and polycarbonate diols. The polyol is typically used in an amount of between 5 weight percent to about 40 weight percent of the composition.

Examples of polyether polyols include linear and/or branched polyethers having hydroxyl groups, and contain substantially no functional group other than the hydroxyl groups. Examples of the polyether polyol may include polyoxyalkylene polyol such as polyethylene glycol, polypropylene glycol, polybutylene glycol and the like. Further, a homopolymer and a copolymer of the polyoxyalkylene polyols may also be employed. Particularly preferable copolymers of the polyoxyalkylene polyols may include an adduct at least one compound selected from the group consisting of ethylene glycol, propylene glycol, diethylene glycol, dipropylene glycol, triethylene glycol, 2-ethylhexanediol-1,3,glycerin, 1,2,6-hexane triol, trimethylol propane, trimethylol ethane, tris(hydroxyphenyl)propane.

Examples of polyester polyols include condensation products of aromatic and aliphatic diacids and diols. The polyols used in this invention preferably have an acid number less than five, and most preferably less than about two.

Additional ingredients may be added to the underfill encapsulant to produce a composition with the desired properties. For example, surfactants may be utilized to aid in the prevention of process voiding during underfilling process. Various surfactants which may be utilized include organic acrylic polymers, silicones, polyoxyethylene/polyoxypropylene block copolymers, ethylene diamine based polyoxyethylene/polyoxypropylene block copolymers, polyol-based polyoxyalkylenes, fatty alcohol-based polyoxyalkylenes, fatty alcohol polyoxyalkylene alkyl ethers and mixtures thereof. In addition, coupling agents, air release agents, flow additives, adhesion promoters, inorganic fillers and other ingredients may also be added as desired.

To utilize the low viscosity underfill composition, an assembly is formed by the placement of one or more CSPs onto a substrate. Solder balls located between the substrate and the CSP provide interconnections between the CSP and the substrate. The low viscosity underfill is then directly applied into the edge of the CSP. The underfill encapsulant flows between the solder balls via capillary action. The package having the underfill encapsulant is heated to a temperature of about 120C for about5 to about 15 minutes. The heating causes the curing of the underfill encapsulant.

The invention can be further described by the following non-limiting examples.

Example. A 40 gram quantity of cycloaliphatic epoxy was added to a small mixing vessel. A 1.4 gram quantity of hexafluoroantimonate salt super acid was added to the vessel with constant stirring. The mixture was stirred for several hours until the catalyst dissolved. Twenty three grams of polyester polyol and 23 grams of divinyl ether were added to the mixture. A 14 gram quantity of SOE2 silica was added and the mixture was stirred until the silica was thoroughly dispersed. The mixture was then stirred until it reached a uniform state. At this time 0.2 grams of an air-release agent were added for improved processing. The mixture was tested for flow time, viscosity and settling. The results of the testing are shown in Table 1.

**Table 1. Test Results**

| Test | Result |
|---|---|
| Flow Time (25°C, 200 micron gap, time to 0.75 inches | 50 seconds |
| Viscosity (cP) | 350 |
| Settling (25°C, time to 2mm/100 mm column | 7 days |

As shown in Table 1, the composition of the present invention provides a short flow time and low viscosity. In addition, the filler particles of the composition do not settle for a long period of time.

Many modifications and variations of this invention can be made without departing from its sprit and scope, as will be apparent to those skilled in the art. The specific embodiments described herein are offered by way of examples only, and the invention is to be limited only by the terms of the appended claims, along with the full scope and equivalents to which such claims are entitled.

## Claims

1. A low viscosity composition comprising one or more non-glycidyl ether epoxies, one or more catalysts and one or more inert components, wherein the one or more catalysts are present in an amount effective to provide curing to the composition.

2. The composition of claim 1, wherein the one or more non-glycidyl epoxies comprise one or more cycloaliphatic epoxies.

3. The composition of claim 2, wherein the one or more cycloaliphatic epoxies comprise one or more epoxidized diolefins.

4. The composition of claim 3, wherein the epoxidized diolefins comprise 3,4-epoxycyclohexylmethyl, 3,4-epoxycyclohexane carboxylate, bis (3,4-epoxycyclohexylmethyl adipate),vinylcyclohexene dioxide, 3,4-epoxy-6-methyl cyclohexyl methyl-3,4-epoxycyclohexane carboxylate, dicyclopentadiene dioxide and mixtures thereof.

5. The composition of claim 1, wherein the non-glycidyl ether epoxies are present in the range of about 20 weight percent to about 60 weight percent of the encapsulant.

6. The composition of claim 1, wherein the one or more catalysts comprise at least one super acid catalyst

7. The composition of claim 6, wherein the one or more super acid catalysts are hexafluoroantimonate salts.

8. The composition of claim 1, wherein the one or more catalysts are present in an amount greater than about 0.9 weight percent of the composition.

9. The composition of claim 8, wherein the one or more catalysts are present in an amount of greater than about 1.4 weight percent of the encapsulant.

10. The composition of claim 1, wherein the one or more inert components comprise reactive or non-reactive diluents.

11. The composition of claim 10, wherein the reactive or non-reactive diluents comprise fine particle fillers.

12. The composition of claim 11, wherein the one or more fine particle fillers are non-conductive fillers.

13. The composition of claim 12, wherein the one or more fine particle non-conductive fillers have an average particles size of less than about three microns.

14. The composition of claim 13, wherein the one or more fine particle non-conductive fillers have an average particles size of less than about one micron.

15. The composition of claim 11, wherein the one or more fine particle non-conductive fillers are selected from the group consisting of silica, fused silica, spherical fused silica, mica, talc, hollow glass beads, zinc oxide, magnesium oxide and mixtures thereof.

16. The composition of claim 1, wherein the one or more inert components are present in the range of about 5 weight percent to about 60 weight percent of the encapsulant.

17. The composition of claim 1, further comprising one or more polyols.

18. The composition of claim 17, wherein the one or more polyols are selected from the group consisting of polyester polyols, polyether polyols, polyolefin polyols, polycarbonate polyols, polyhydroxy ethers (substituted or unsubstituted polyalkylene ether glycols or polyhydroxy polyalkylene ethers), polyhydroxy polyesters, the ethylene or propylene oxide adducts of polyols, the monosubstituted esters of glycerol, polybutadiene diol, polyisobutylene diol, polycarbonates and mixtures thereof.

19. The composition of claim 17, wherein the one or more polyols are present in the range of about 5 weight percent to about 40 weight percent of the encapsulant.

20. The composition of claim 1, further comprising one or more non-epoxy, low viscosity reactive diluent.

21. The composition of claim 20, wherein the one or more non-epoxy, low viscosity reactive diluent is selected from the group consisting of vinyl ether, cyclic lactone,

22. The composition of claim 21, further comprising an epoxy diluent selected from the group consisting of p-tert-butyl-phenyl glycidyl ether, allyl glycidyl ether, glycerol diglycidyl ether, glycidyl ether of alkyl phenol, butanediodiglycidylether and mixtures thereof..

23. The composition of claim 1, further comprising one or more of the group consisting of surfactants, organic acrylic polymers, silicones, polyoxyethylene/polyoxypropylene block copolymers, ethylene diamine based polyoxyethylene/polyoxypropylene block copolymers, polyol-based polyoxyalkylenes, fatty alcohol-based polyoxyalkylenes, fatty alcohol polyoxyalkylene alkyl ethers, coupling agents, air release agents, flow additives, adhesion promoters and mixtures thereof.

24. A method of preparing an electronic device comprising the steps of placing a substrate in close proximity to one or more electronic components such that a gap is created between the substrate and the one or more electronic components, applying the low viscosity underfill encapsulant of claim 1 to the area gap, and heating the electronic device to a temperature sufficient to cure the low viscosity underfill encapsulant.

25. An electronic device containing the low viscosity underfill encapsulant of claim 1.
